# EUROPEAN PATENT APPLICATION

(11) **EP 2 662 155 A1**
(43) Date of publication of application: **13.11.2013**
(21) Application number: 13167228.9
(22) Date of filing: 10.05.2013
(51) Int. Cl.: B07C 1/00

(54) **Letter processing apparatus and letter processing method**

(30) Priority: 11.05.2012 JP 2012109272
(71) Applicant: Kabushiki Kaisha Toshiba, Minato-ku, Tokyo 105-8001 (JP)
(72) Inventor: Mimura, Takayuki, Tokyo, 105-8001 (JP)
(74) Representative: Horn Kleimann Waitzhofer

(57) **Abstract**

According to one embodiment, a letter processing apparatus includes a first conveyance path (11a), a first detector (15a), a second conveyance path (11b), a second detector (15b), a third conveyance path (11d), and a sorting controller (20). The first detector is configured to detect a letter conveyed along the first conveyance path. The second detector is configured to detect a letter conveyed along the second conveyance path. The third conveyance path is configured to allow a letter to pass therethrough. The sorting controller is configured to sort a first letter to the first conveyance path and to sort a second letter, which is conveyed after the first letter, to the second conveyance path. The sorting controller is configured to sort a third letter, which is conveyed after the second letter, to one of the first conveyance path, the second conveyance path, and the third conveyance path based on an inter-letter distance between two letters to be conveyed, conveyance velocities of respective letters, and a preparation time after a first detection in each of the first detector and the second detector is complete until a second detection is ready to be executed.

## Description

### FIELD

Embodiments described herein relate generally to a letter processing apparatus and letter processing method.

### BACKGROUND

In recent years, automation of letter processing of postal items and the like has advanced, and various techniques related to the letter processing have been disclosed accordingly. For example, there is disclosed a technique related to a sorting machine, which reads an image of a letter, recognizes address information from the read image, and sorts the letter based on the recognition result of the address information.

The sorting machine includes a detector used to detect a weight of a letter, and sorts the letter based on the weight detection result.

Since the sorting machine processes letters at very high speed, for example, the detection processing by the detector cannot often be finished in time. For example, during a preparation time period after a detector arranged in correspondence with a conveyance path detects a first letter until the detector is ready to detect a next second letter, if the second letter reaches the detector, the second letter cannot be normally detected.

### BRIEF DESCRIPTION OF THE DRAWINGS

FIG. 1 is a schematic view showing an example of the arrangement of a mail sorting processing machine to which a letter processing apparatus according to an embodiment is applicable;
FIG. 2 is a view showing an example of a partial arrangement of a conveyance unit;
FIG. 3 is a view for explaining an inter-letter distance, conveyance velocity, and acceptable time;
FIG. 4A is a view for explaining an example of letter conveyance control;
FIG. 4B is a flowchart showing an example of letter conveyance control; and
FIG. 5 is a block diagram showing an example of a partial arrangement of a control mechanism of the mail sorting processing machine.

### DETAILED DESCRIPTION

In general, according to one embodiment, a letter processing apparatus includes a first conveyance path (11a), a first detector (15a), a second conveyance path (11b), a second detector (15b), a third conveyance path (11d), and a sorting controller (20). The first detector is configured to detect a letter conveyed along the first conveyance path. The second detector is configured to detect a letter conveyed along the second conveyance path. The third conveyance path is configured to allow a letter to pass therethrough. The sorting controller is configured to sort a first letter to the first conveyance path and to sort a second letter, which is conveyed after the first letter, to the second conveyance path. The sorting controller is configured to sort a third letter, which is conveyed after the second letter, to one of the first conveyance path, the second conveyance path, and the third conveyance path based on an inter-letter distance between two letters to be conveyed, conveyance velocities of respective letters, and a preparation time after a first detection in each of the first detector and the second detector is complete until a second detection is ready to be executed.

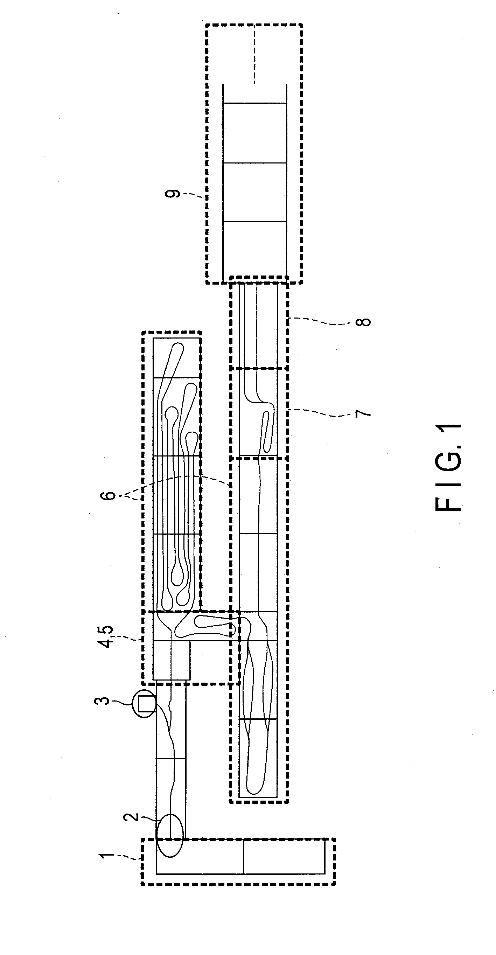

FIG. 1 is a schematic view showing an example of the arrangement of a mail sorting processing machine to which a letter processing apparatus according to this embodiment is applicable.

As shown in FIG. 1, the mail sorting processing machine includes a supply unit 1, pickup unit 2, rejection/collection unit 3, barcode reader 4, OCR scanner 5, conveyance unit 6, stage pass unit 7, sorting unit 8, and collection unit 9.

The supply unit 1 sets input letters (postal items). The pickup unit 2 picks up each letter set in the supply unit 1, and feeds the picked-up letter into the machine. The rejection/collection unit 3 rejects and collects a tampered letter, uniquely-shaped letter, and the like, and feeds an appropriate letter other than these letters to the barcode reader 4 and OCR scanner 5.

The barcode reader 4 reads a barcode from the fed appropriate letter. On the letter, a barcode corresponding to a postal code and address information is recorded. The OCR scanner 5 reads an image from the fed appropriate letter, and recognizes the postal code and address information in the image.

The conveyance unit 6 conveys a letter based on the barcode read result or the recognition result of the postal code and address information. Furthermore, the stage pass unit 7 drives stage pass gates based on the barcode read result or the recognition result of the postal code and address information to sort letters to respective stages. Each sorted letter is conveyed to the sorting unit 8, and is collected in each collection pocket of the collection unit 9 based on the barcode read result or the recognition result of the postal code and address information.

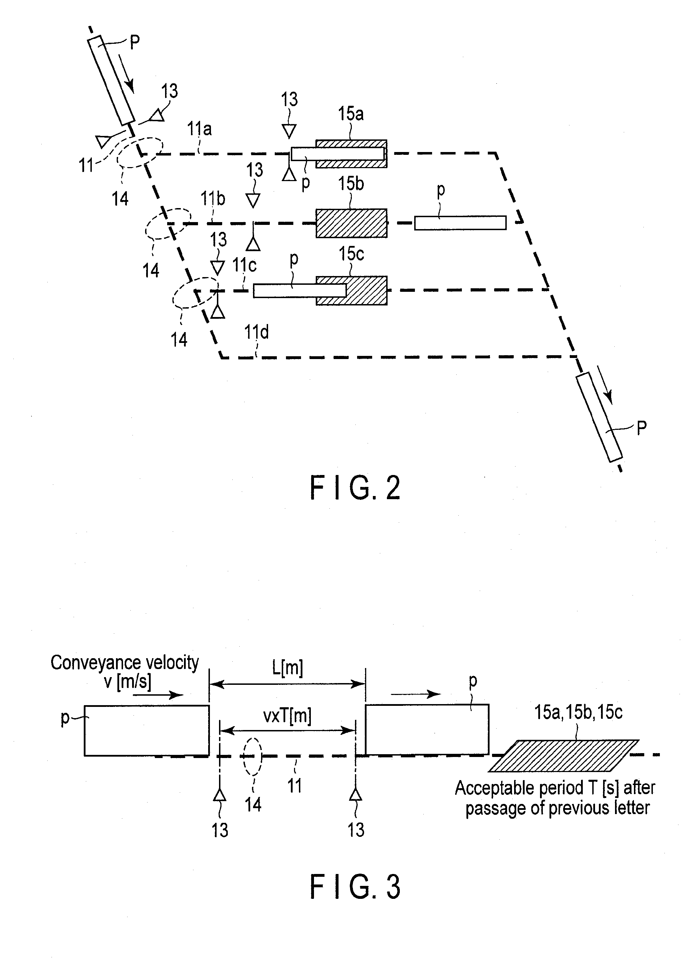

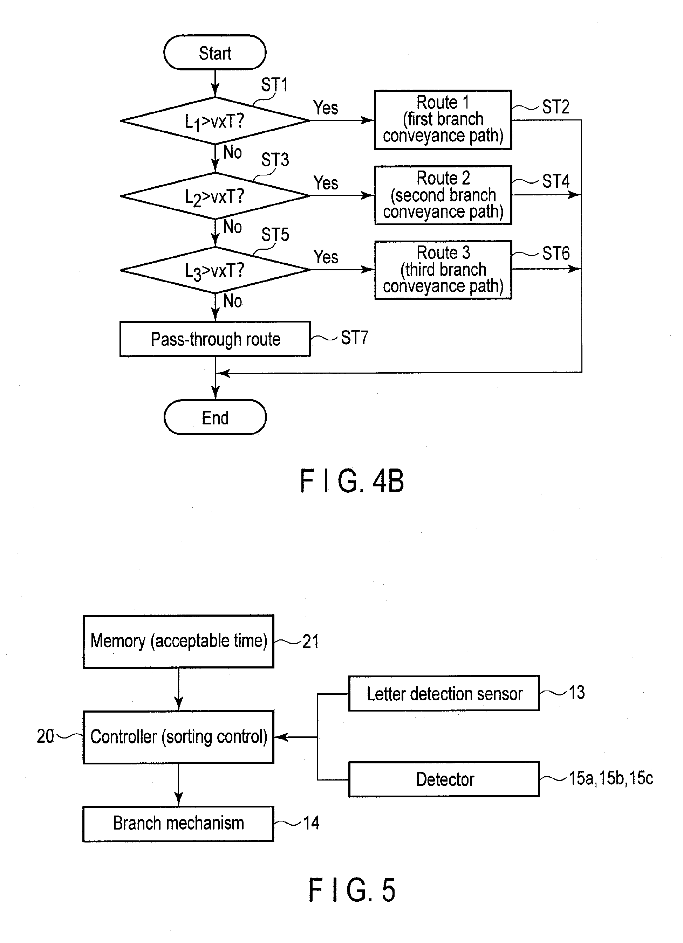

FIG. 2 is a view showing an example of a partial arrangement of the conveyance unit 6. FIG. 5 is a block diagram showing an example of a partial arrangement of a control mechanism of the mail sorting processing machine.

As shown in FIG. 2, the conveyance unit 6 includes a conveyance path 11. The conveyance path 11 includes a first branch conveyance path 11a, second branch conveyance path 11b, third branch conveyance path 11c, pass-through conveyance path 11d. Also, the conveyance unit 6 includes a large number of letter detection sensors 13 (for example, transmission sensors) along the conveyance path 11, and also a plurality of branch mechanisms 14. Furthermore, the conveyance unit 6 includes a first detector 15a arranged in correspondence with the first branch conveyance path 11a, a second detector 15b arranged in correspondence with the second branch conveyance path 11b, and a third detector 15c arranged in correspondence with the third branch conveyance path 11c. For example, the first detector 15a, second detector 15b, and third detector 15c are those required to detect a weight of a letter P.

A letter conveyed along the conveyance path 11 is detected by the letter detection sensor 13, and the detection result is supplied to a controller 20 shown in FIG. 5. Each branch mechanism 14 is driven according to a branch control signal from the controller 20, and branches letters.

An inter-letter distance, conveyance velocity, and acceptable time will be described below with reference to FIG. 3.

The controller 20 receives detection results from the many letter detection sensors 13 arranged along the conveyance path 11, and detects an inter-letter distance (L [m]) between two letters to be conveyed based on the detection results from the large number of letter detection sensors 13. For example, the controller 20 can detect an inter-letter distance between a first letter and a second letter conveyed next to the first letter, and can also detect an inter-letter distance between the first letter and an arbitrary third letter conveyed after the first letter. That is, the controller 20 can detect an inter-letter distance between two letters which are continuously conveyed, and can also detect an inter-letter distance between two discontinuous letters.

The controller 20 can also detect a letter conveyance velocity (v [m/s]) based on the detection results from the large number of letter detection sensors 13. Note that the conveyance velocities of respective letters are nearly equal to each other.

The controller 20 can also detect acceptable times (T [s]) of the first detector 15a, second detector 15b, and third detector 15c. Alternatively, a memory 21 may store acceptable times of the first detector 15a, second detector 15b, and third detector 15c in advance, and the controller 20 may read out the acceptable times from the memory 21. For example, the acceptable times of the first detector 15a, second detector 15b, and third detector 15c are nearly equal to each other.

The acceptable time of the first detector 15a means a preparation time after the first detector 15a completes detection of a certain letter until it is ready to detect a next fed letter. In other words, the acceptable time is a time lag after passage of a previous letter until detection of the next letter can be started.

Letter conveyance control will be described below. Note that this embodiment will explain a case in which three conveyance paths, that is, the first branch conveyance path 11a, second branch conveyance path 11b, and third branch conveyance path 11c allow detection processing (weight detection processing), and one conveyance path, that is, the pass-through conveyance path 11d does not allow detection processing. However, the letter conveyance control of this embodiment can be implemented by two or more conveyance paths which allow the detection processing and one or more conveyance paths which do not allow the detection processing.

For example, the controller 20 sorts a first letter to the first branch conveyance path 11a, and sorts a second letter, which is conveyed after the first letter, to the second branch conveyance path 11b. Furthermore, the controller 20 sorts a third letter, which is conveyed after the second letter, to the third branch conveyance path 11c.

Moreover, the controller 20 sorts a fourth letter, which is conveyed after the third letter, to any of the first branch conveyance path 11a, second branch conveyance path 11b, third branch conveyance path 11c, and pass-through conveyance path 11d based on an inter-letter distance between two letters to be conveyed, conveyance velocities of respective letters, and acceptable times of the first detector 15a, second detector 15b, and third detector 15c.

For example, when a first inter-letter distance between the third and fourth letters is longer than an acceptable time moving distance of the letter which moves during the acceptable time (first inter-letter distance > letter conveyance velocity × acceptable time), the controller 20 sorts the fourth letter to one of the first branch conveyance path 11a, second branch conveyance path 11b, and third branch conveyance path 11c. For example, the controller 20 sorts the fourth letter to the first branch conveyance path 11a.

For example, when the first inter-letter distance is not longer than a preparation time moving distance, and a second inter-letter distance between the first and fourth letters is longer than the preparation time moving distance, the controller 20 sorts the fourth letter to the first branch conveyance path 11a.

For example, when the second inter-letter distance is not longer than the preparation time moving distance, the controller 20 sorts the fourth letter to the pass-through conveyance path 11d.

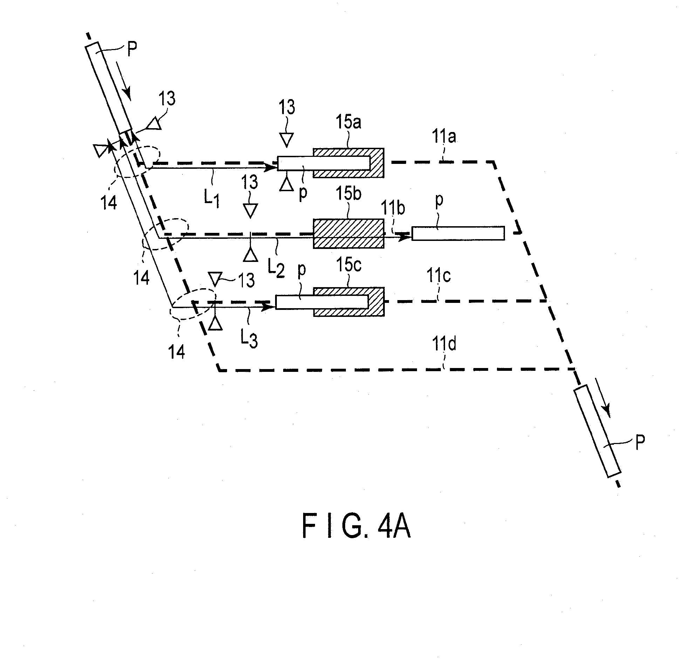

FIG. 4A is a view for explaining an example of the letter conveyance control, and FIG. 4B is a flowchart showing an example of the letter conveyance control.

For example, the controller 20 sorts the first letter to the first branch conveyance path 11a, sorts the second letter, which is conveyed after the first letter, to the second branch conveyance path 11b, and sorts the third letter, which is conveyed after the second letter, to the third branch conveyance path 11c.

Furthermore, the controller 20 sorts the fourth letter, which is conveyed after the third letter, to one of the first branch conveyance path 11a, second branch conveyance path 11b, third branch conveyance path 11c, and pass-through conveyance path 11d based on an inter-letter distance L1 between the first and fourth letters, an inter-letter distance L2 between the second and fourth letters, an inter-letter distance L3 between the third and fourth letters, conveyance velocities (v) of the respective letters, and acceptable times (T) of the first detector 15a, second detector 15b, and third detector 15c.

For example, if a condition L1 > v × T is satisfied (YES in step ST1), the controller 20 selects the first branch conveyance path 11a (step ST2), and controls the branch mechanisms 14 so that the fourth letter is conveyed to the first branch conveyance path 11a.

On the other hand, if the condition L1 > v × T is not satisfied (NO in step ST1), and a condition L2 > v × T is satisfied (YES in step ST3), the controller 20 selects the second branch conveyance path 11b (step ST4), and controls the branch mechanisms 14 so that the fourth letter is conveyed to the second branch conveyance path 11b.

Also, if the condition L2 > v × T is not satisfied (NO in step ST3), and a condition L3 > v × T is satisfied (YES in step ST5), the controller 20 selects the third branch conveyance path 11c (step ST6), and controls the branch mechanisms 14 so that the fourth letter is conveyed to the third branch conveyance path 11c.

If the condition L3 > v × T is not satisfied (NO in step ST5), the controller 20 selects the pass-through conveyance path 11d (ST7), and controls the branch mechanisms 14 so that the fourth letter is conveyed to the pass-through conveyance path 11d.

As described above, since the letter processing apparatus according to this embodiment includes two or more conveyance paths which allow the detection processing and one or more conveyance paths which do not allow the detection processing, a plurality of letters which are conveyed at high speed can be efficiently detected (for example, their weights can be detected). Even when the detection processing cannot be finished in time, the subsequent letter can be coped with the one or more conveyance paths which do not allow the detection processing.

Since the letter processing apparatus according to this embodiment can appropriately select the conveyance path, detection errors can be eliminated, and cases in which a letter passes through the detection processing can also be reduced.

As described above, according to this embodiment, a letter processing apparatus and letter processing method, which support high-speed conveyance, and efficiently detect letters, can be provided.

## Claims

1. A letter processing apparatus **characterized by** comprising:
a first conveyance path (11a);
a first detector (15a) configured to detect a letter conveyed along the first conveyance path;
a second conveyance path (11b);
a second detector (15b) configured to detect a letter conveyed along the second conveyance path;
a third conveyance path (11d) configured to allow a letter to pass therethrough; and
a sorting controller (20) configured to sort a first letter to the first conveyance path and to sort a second letter, which is conveyed after the first letter, to the second conveyance path.
wherein the sorting controller is configured to sort a third letter, which is conveyed after the second letter, to one of the first conveyance path, the second conveyance path, and the third conveyance path based on an inter-letter distance between two letters to be conveyed, conveyance velocities of respective letters, and a preparation time after a first detection in each of the first detector and the second detector is complete until a second detection is ready to be executed.

2. The apparatus of claim 1, **characterized in that** the sorting controller is configured to sort the third letter to the first conveyance path or the second conveyance path when a first inter-letter distance between the second letter and the third letter is longer than a preparation time moving distance of the letter which moves during the preparation time.

3. The apparatus of claim 2, **characterized in that** the sorting controller is configured to sort the third letter to the first conveyance path when the first inter-letter distance is not longer than the preparation time moving distance, and a second inter-letter distance between the first letter and the third letter is longer than the preparation time moving distance.

4. The apparatus of claim 3, **characterized in that** the sorting controller is configured to sort the third letter to the third conveyance path when the second inter-letter distance is not longer than the preparation time moving distance.

5. The apparatus of any one of claims 1 to 4, **characterized in that** the first detector and the second detector are configured to detect a weight of the letter.

6. A letter processing method **characterized by** comprising:
sorting a first letter to a first conveyance path, and detecting the first letter conveyed along the first conveyance path by a first detector;
sorting a second letter, which is conveyed after the first letter, to a second conveyance path, and detecting the second letter conveyed along the second conveyance path by a second detector; and
sorting a third letter, which is conveyed after the second letter, to one of the first conveyance path, the second conveyance path, and a third conveyance path which allows a letter to pass therethrough based on an inter-letter distance between two letters to be conveyed, conveyance velocities of respective letters, and a preparation time after a first detection in each of the first detector and the second detector is complete until a second detection is ready to be executed.
